# FASCICULE DE BREVET EUROPEEN

(11) **EP 3 598 706 B1**
(45) Date de publication et mention de la délivrance du brevet: **23.03.2022**
(21) Numéro de dépôt: 19185096.5
(22) Date de dépôt: 09.07.2019
(51) Int. Cl.: H04L 25/02

(54) **PROCÉDÉ DE CORRECTION D'UNE RÉPONSE IMPULSIONNELLE D'UN CANAL DE PROPAGATION MULTI-TRAJETS, PRODUIT PROGRAMME D'ORDINATEUR ET DISPOSITIF CORRESPONDANTS**
KORREKTURVERFAHREN EINER IMPULSANTWORT EINES MEHRWEG-ÜBERTRAGUNGSKANALS, ENTSPRECHENDES SOFTWAREPRODUKT UND ENTSPRECHENDE VORRICHTUNG
METHOD FOR CORRECTING A IMPULSE RESPONSE OF A MULTIPATH PROPAGATION CHANNEL, CORRESPONDING COMPUTER PROGRAM PRODUCT AND DEVICE

(30) Priorité: 16.07.2018 FR 1856550
(43) Date de publication de la demande: 22.01.2020
(73) Titulaire: Enensys Technologies, 35510 Cesson Sévigné (FR)
(72) Inventeur: MOSSET, Frédéric, 35000 RENNES (FR); PIROT, Frédéric, 35490 SENS DE BRETAGNE (FR)
(74) Mandataire: Vidon Brevets & Stratégie

(56) Documents cités:
- US-A- 6 121 927
- US-B1- 6 370 397

## Description

### 1 DOMAINE TECHNIQUE

Le domaine de l'invention est celui de la mise en œuvre de la propagation d'information via un canal de propagation pouvant présenter des trajets multiples (ou échos).

L'invention se rapporte plus particulièrement à la surveillance des conditions de propagation via un tel canal de propagation.

L'invention trouve de nombreuses applications, notamment, mais non exclusivement, dans le domaine des réseaux de diffusion, par exemple les réseaux de télédiffusion numérique (notamment selon le standard DVB-T/T2 (de l'anglais « Digital Video Broadcasting - Terrestrial »), ISDB-T (de l'anglais « Integrated Services Digital Broadcasting - Terrestrial »), ATSC-3 (de l'anglais « Advanced Television Systems Committee »), etc.) ou encore les réseaux de radiodiffusion numérique (notamment selon le standard DAB (de l'anglais « Digital Audio Broadcasting »)).

### 2 ARRIERE-PLAN TECHNOLOGIQUE

On s'attache plus particulièrement dans la suite de ce document à décrire une problématique existante dans le domaine de la surveillance du canal de propagation utilisé dans les réseaux de télédiffusion numérique, notamment SFN (pour « Single Frequency Network » en anglais), à laquelle ont été confrontés les inventeurs de la présente demande de brevet. L'invention ne se limite bien sûr pas à ce domaine particulier d'application, mais présente un intérêt pour la surveillance de tout canal de propagation présentant des trajet multiples (e.g. transmission acoustique, optique, etc.).

La réponse impulsionnelle d'un canal de propagation radioélectrique, ou CIR (pour « Channel Impulse Response » en anglais), est la réponse du canal de propagation en question a une forme d'onde impulsionnelle émise par un émetteur à un instant donné. Une telle impulsion est reçue directement et éventuellement également sous formes de répliques par un récepteur après un temps de propagation dans le canal en question.

Par exemple, si le canal de propagation est de type mono-trajet (e.g. quand l'émetteur et le récepteur sont en vue directe), une impulsion émise par l'émetteur engendre une seule impulsion reçue par le récepteur. Si en revanche le canal de propagation est du type multi-trajets (e.g. via des réflexions sur des objets environnants), une impulsion émise engendrera un train d'impulsions reçues par le récepteur.

Par ailleurs, dans un réseau SFN où plusieurs émetteurs transmettent les mêmes données au même instant et sur la même fréquence, le même phénomène est observé au niveau d'un récepteur placé dans une zone de couverture de chacun des émetteurs en question.

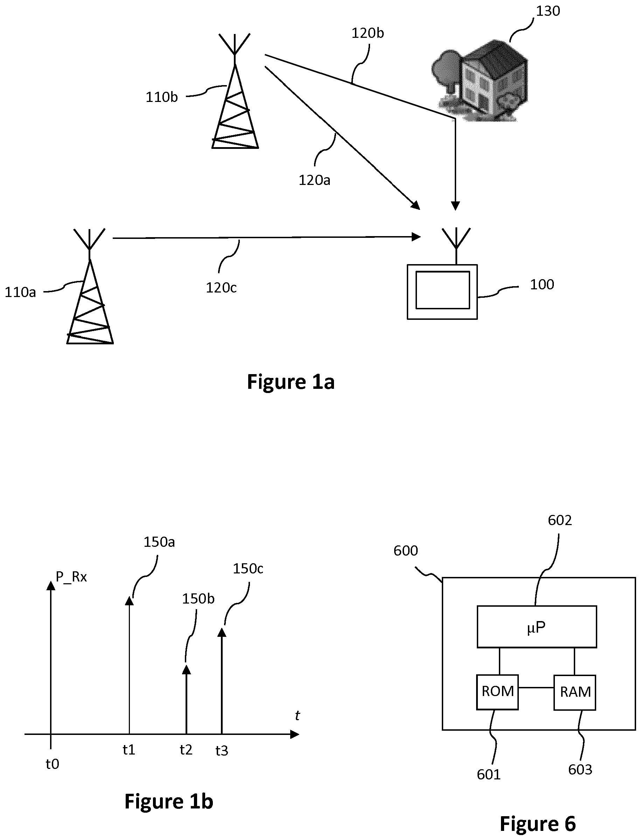

Enfin, des multi-trajets peuvent avoir lieu au sein d'un réseau SFN, ce qui donne alors lieu à l'observation de CIRs encore plus complexes comme illustré sur les **figures 1a et 1b****.**

Plus particulièrement, le terminal 100 de la figure la reçoit trois fois, via trois trajets 120a, 120b et 120c distincts, une impulsion émise simultanément à l'instant t0 par les premier 110a et deuxième 110b émetteurs.

De la sorte, la CIR obtenue (figure 1b) au niveau du terminal 100 présente :
- à l'instant t1 un premier pic 150a correspondant au premier trajet 120a en vue directe entre le deuxième émetteur 110b et le terminal 100. Le premier trajet 120a est en effet le plus court parmi les trois trajets 120a, 120b et 120c ;
- à l'instant t2 un deuxième pic 150b correspondant au deuxième trajet 120b entre le deuxième émetteur 110b et le terminal 100 via une réflexion sur le bâtiment 130 ; et
- à l'instant t3 un troisième pic 150c correspondant au troisième trajet 120c en vue directe entre le premier émetteur 110a et le terminal 100, le troisième trajet 120c étant le plus long parmi les trois trajets 120a, 120b et 120c.

Afin de gérer un réseau du type SFN, des équipements de surveillance permettent de surveiller la CIR reçue en un point donné. En mettant ensuite des alarmes de présence de certains trajets, on s'assure que les différents émetteurs du réseau sont toujours en train d'émettre.

Une première problématique liée à un tel système de surveillance vient du fait que la CIR n'est pas obligatoirement fixe dans le temps. Par exemple, dans le cas illustré sur la figure 1a, si le deuxième trajet 120b est provoqué par la réflexion sur un camion garé sur un parking, et non le bâtiment 130, au départ du camion, la CIR va être modifiée.

Une deuxième problématique liée à un tel système de surveillance vient du fait que la CIR est obtenue après démodulation par le récepteur du dispositif de surveillance. De tels démodulateurs vont chercher à positionner la CIR dans une fenêtre temporelle d'observation prédéfinie, et optimum au sens de la démodulation et du décodage.

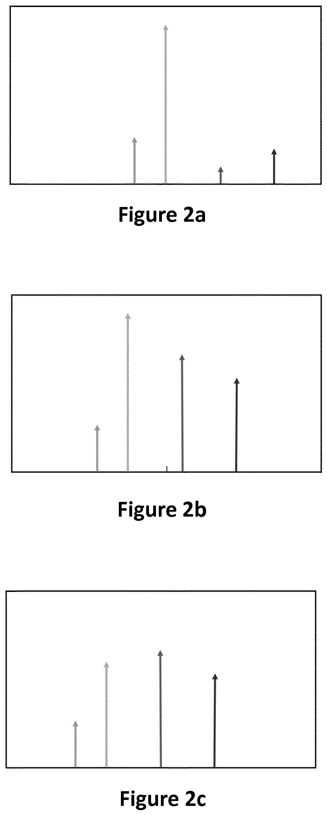

Par exemple, certains démodulateurs vont positionner la CIR dans la fenêtre d'observation en question en se basant sur le centre de gravité pondéré des différents pics de la CIR (chaque pic correspondant à un trajet donné du canal de propagation). Un tel comportement est illustré sur les trois CIRs des **figures 2a à 2c** correspondant chacune à un même canal considéré à trois instants différents. On obtient ainsi trois CIRs présentant des pics différemment positionnés dans la fenêtre d'observation en fonction notamment de la puissance des pics en question (et donc de manière équivalente de l'atténuation subie par le signal le long du trajet correspondant). On observe ainsi qu'un chemin donné à de fortes chances de changer de position temporelle dans la fenêtre d'observation à cause de l'évolution de la puissance et du délai des différents chemins du canal de propagation. De la sorte, un appareil de surveillance pour lequel une alerte est positionnée sur un chemin donné (e.g. situé en milieu de fenêtre) à un instant donné a de fortes chances de déclencher une fausse alarme lorsque le trajet surveillé se déplace dans le temps dans la fenêtre d'observation. Ce comportement est encore amplifié lorsque le démodulateur positionne la CIR dans la fenêtre en se basant sur le chemin le plus fort. Dans ce cas en effet, un basculement brutal d'un chemin à un autre peut se produire lorsque le chemin de plus forte puissance change à un moment donné.

Il existe ainsi un besoin pour stabiliser la CIR, par exemple afin de minimiser les fausses alertes d'un équipement de surveillance.

Il existe enfin un besoin pour que la méthode proposée soit simple en ce qui concerne l'implémentation matérielle.

### 3 RESUME

Ainsi, selon un premier aspect, l'invention concerne un procédé de correction d'une réponse impulsionnelle d'un canal de propagation multi-trajets. Un tel procédé comprend au moins une itération des étapes suivantes :
- obtention d'une réponse impulsionnelle courante du canal de propagation ;
- estimation d'un décalage temporel entre la réponse impulsionnelle courante et une réponse impulsionnelle de référence du canal de propagation ; et
- correction de la réponse impulsionnelle courante sur la base au moins du décalage temporel, délivrant une réponse impulsionnelle corrigée.

Ainsi, l'invention propose une solution nouvelle et inventive pour permettre la correction d'une réponse impulsionnelle d'un canal de propagation multi-trajets, ou CIR (pour « Channel Impulse Response » en anglais), e.g. un canal de propagation radiofréquence.

Pour ce faire, la méthode revendiquée propose d'estimer les dérives temporelles de la CIR en question (en d'autres termes le décalage dans le temps du support temporel de la CIR) afin de corriger cette dernière. De la sorte, la CIR se trouve stabilisée. Par exemple, les pics représentatifs des trajets multiples du canal de propagation restent à une même localisation temporelle quelles que soient les dérives temporelles de la CIR au fil du temps.

Selon un mode de réalisation particulier, l'estimation d'un décalage temporel comprend un calcul d'une fonction de corrélation entre la réponse impulsionnelle courante et la réponse impulsionnelle de référence. Le décalage temporel est fonction d'un extremum de la fonction de corrélation.

Ainsi, l'estimation du décalage temporel est précise.

Selon un mode de réalisation particulier, l'estimation d'un décalage temporel comprend, pour au moins deux pics de la réponse impulsionnelle courante correspondant chacun à un trajet du canal de propagation, les sous-étapes suivantes :
- détermination d'un délai candidat entre un des pics et un pic de même rang dans la réponse impulsionnelle de référence ;
- mise en concordance temporelle de la réponse impulsionnelle courante avec la réponse impulsionnelle de référence sur la base du délai candidat ;
- comparaison de la réponse impulsionnelle courante avec la réponse impulsionnelle de référence après la mise en concordance temporelle sur la base du délai candidat, la comparaison délivrant un score de pertinence associé au délai candidat. Le décalage temporel est fonction du délai candidat associé au score de pertinence extrémal.

Une telle estimation permet par exemple de gérer des configurations de CIR dans lesquelles l'utilisation d'une corrélation peut s'avérer moins fiable, notamment le cas où il n'y a pas de variation des localisations temporelles des pics de la CIR, mais une variation relative de la puissance des pics en question.

Selon un mode de réalisation particulier, le score de pertinence est fonction du nombre de pics de la réponse impulsionnelle courante se superposant à un pic correspondant de la réponse impulsionnelle de référence après la mise en concordance temporelle sur la base du délai candidat.

Selon un mode de réalisation particulier, si le score de pertinence extrémal est, en valeur absolue, inférieur à un score minimum prédéterminé, l'estimation d'un décalage temporel comprend en outre un calcul d'une fonction de corrélation entre la réponse impulsionnelle courante et la réponse impulsionnelle de référence. Le décalage temporel est fonction d'un extremum de la fonction de corrélation en lieu et place du délai candidat associé à un score de pertinence extrémal.

Ainsi, les deux méthodes complémentaires (i.e. la méthode basée sur une mise en concordance temporelle et la méthode basée sur le calcul d'une fonction de corrélation) sont chacune mises en œuvre lorsqu'elles donnent les meilleurs résultats, permettant ainsi de fiabiliser au maximum l'estimation obtenue.

Selon un mode de réalisation particulier, le calcul d'une fonction de corrélation est effectué dans le domaine fréquentiel.

Selon un mode de réalisation particulier, le procédé comprend en outre une étape d'estimation d'au moins un niveau absolu d'un pic courant de la réponse impulsionnelle courante. La correction de la réponse impulsionnelle courante est également basée sur ledit au moins un niveau absolu.

Ainsi, le niveau (e.g. l'amplitude ou la puissance) des pics présents dans la CIR sont également corrigés en plus des dérives temporelles. Par exemple, lorsque la CIR en question est obtenue en sortie de démodulateur d'un récepteur, une compensation est obtenue pour les variations de niveau introduites par une combinaison des effets du système d'AGC (pour « Automatic Gain Control » en anglais) et des effets du démodulateur lorsque ce dernier se cale temporellement sur un trajet de plus fort niveau.

Selon un mode de réalisation particulier, l'estimation du niveau absolu du pic courant comprend les sous-étapes suivantes :
- mise en concordance temporelle de la réponse impulsionnelle courante avec la réponse impulsionnelle de référence sur la base du décalage temporel ;
- détermination d'un écart de niveau entre le pic courant et au moins un pic de la réponse impulsionnelle de référence voisin temporellement du pic courant après la mise en concordance temporelle sur la base du décalage temporel ;
- obtention d'une évolution d'un niveau d'un signal ayant été propagé à travers le canal de propagation lorsque le canal de propagation passe :
   - d'un état de référence correspondant à la réponse impulsionnelle de référence ; à
   - un état correspondant à la réponse impulsionnelle courante.
le niveau absolu du pic courant est fonction au moins de l'écart de niveau et de l'évolution du niveau du signal.

Selon un mode de réalisation particulier, l'étape d'obtention comprend une suppression de pics ayant un niveau absolu inférieur à un seuil prédéterminé dans une réponse impulsionnelle primaire du canal de propagation délivrant la réponse impulsionnelle courante.

Ainsi, seuls les trajets d'intérêt sont traités.

Selon un mode de réalisation particulier, pour une itération courante, la réponse impulsionnelle de référence est une réponse impulsionnelle corrigée obtenue à une itération précédente.

Selon un mode de réalisation particulier, pour une itération courante, la réponse impulsionnelle de référence est une réponse impulsionnelle du canal de propagation sélectionnée à un instant donné.

Selon un mode de réalisation particulier, le procédé comprend en outre une étape d'affichage de la réponse impulsionnelle corrigée sur un écran d'un équipement de surveillance du canal de propagation.

L'invention concerne également un produit programme d'ordinateur comprenant des instructions de code de programme pour l'exécution des étapes du procédé de correction d'une réponse impulsionnelle d'un canal de propagation multi-trajets tel que décrit ci-dessus.

L'invention concerne également un dispositif de correction d'une réponse impulsionnelle d'un canal de propagation multi-trajets apte à mettre en œuvre le procédé de correction d'une réponse impulsionnelle d'un canal de propagation multi-trajets selon l'invention (selon l'un quelconque des différents modes de réalisation précités).

Ainsi, les caractéristiques et avantages de ce dispositif sont les mêmes que ceux du procédé de correction d'une réponse impulsionnelle d'un canal de propagation multi-trajets décrit précédemment. Par conséquent, ils ne sont pas détaillés plus amplement.

### 4 LISTE DES FIGURES

D'autres caractéristiques et avantages de l'invention apparaîtront à la lecture de la description suivante, donnée à titre d'exemple indicatif et non limitatif, et des dessins annexés, dans lesquels :
- les figures la et 1b, déjà discutées ci-dessus en section 2, illustrent respectivement un terminal recevant un signal via trois trajets dans un réseau SFN et la CIR correspondante ;
- les figures 2a, 2b et 2c, déjà discutées ci-dessus en section 2, illustrent trois CIR correspondant chacune à un même canal considéré à trois instants différents ;
- la figure 3a illustre les étapes d'un procédé de correction d'une CIR selon un mode de réalisation de l'invention ;
- la figure 3b illustre les étapes d'un procédé de correction d'une CIR selon un autre mode de réalisation de l'invention ;
- les figures 3c et 3d détaillent respectivement des sous-étapes des étapes E310 et E320 du procédé de la figure 3b selon un mode de réalisation de l'invention ;
- la figure 4 illustre un exemple de calcul d'un délai tel que mis en œuvre dans une sous-étape de l'étape E310 du procédé de la figure 3b ;
- les figures 5a et 5b illustrent une problématique rencontrée lors de la mise en œuvre de l'étape E320 du procédé de la figure 3b ;
- la figure 6 illustre les blocs fonctionnels d'un dispositif de correction d'une CIR selon un mode de réalisation de l'invention.

### 5 DESCRIPTION DETAILLEE DE L'INVENTION

Sur toutes les figures du présent document, les éléments et étapes identiques sont désignés par une même référence.

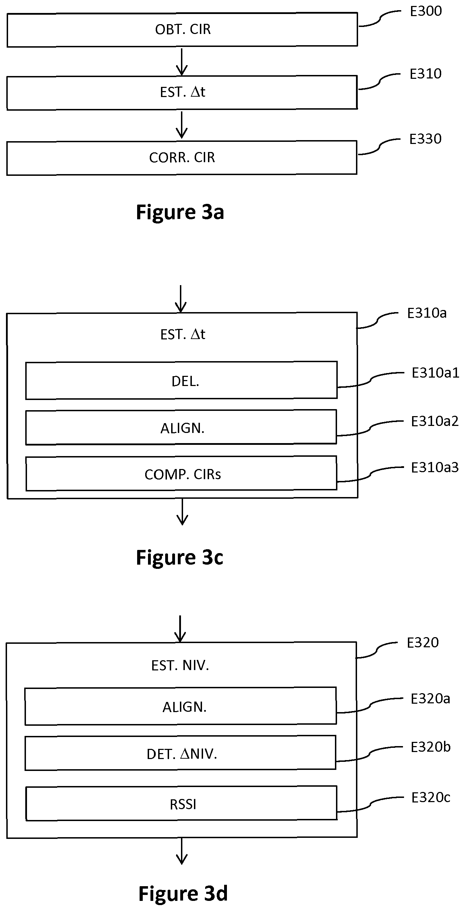

On décrit maintenant, en relation avec la **figure 3a****,** les principales étapes d'un procédé de correction d'une CIR selon un mode de réalisation de l'invention représentatif du principe général de l'invention.

Lors d'une **étape E300,** une CIR courante d'un canal de propagation multi-trajets (e.g. un canal de propagation radiofréquence, acoustique, etc.) est obtenue. Une telle CIR représente la réponse du canal de propagation a une forme d'onde impulsionnelle émise par au moins un émetteur à un instant donné.

Lors d'une **étape E310,** un décalage temporel entre la CIR courante obtenue lors de l'étape E300 et une CIR de référence du canal de propagation est estimé. Ici, par décalage temporel on comprend le décalage dans le temps entre les supports temporels de la CIR courante et de la CIR de référence. Par exemple, la CIR de référence est une réponse impulsionnelle du canal de propagation sélectionnée à un instant donné (i.e. une CIR de référence « initiale »).

Lors d'une **étape E330,** la CIR courante est corrigée sur la base du décalage temporel estimé lors de la mise en œuvre de l'étape E300. Une CIR corrigée est alors délivrée.

On note que ces différentes étapes peuvent être mises en œuvre sous la forme d'au moins une itération.

Ainsi, la CIR du canal de propagation se trouve stabilisée. Par exemple, les pics représentatifs des trajets multiples du canal de propagation restent à une même localisation temporelle quelles que soient les dérives temporelles de la CIR au fil du temps.

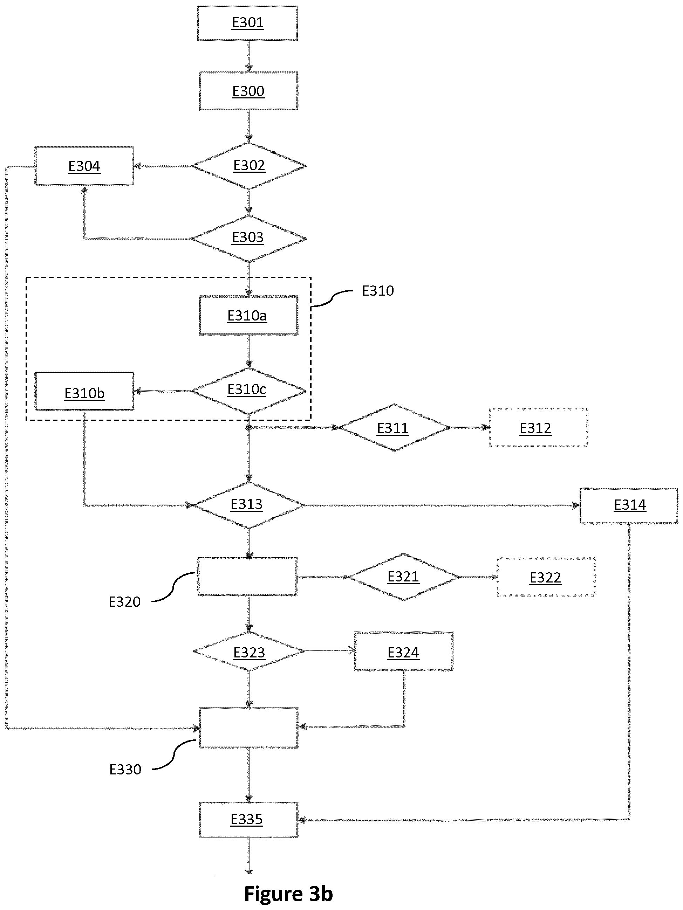

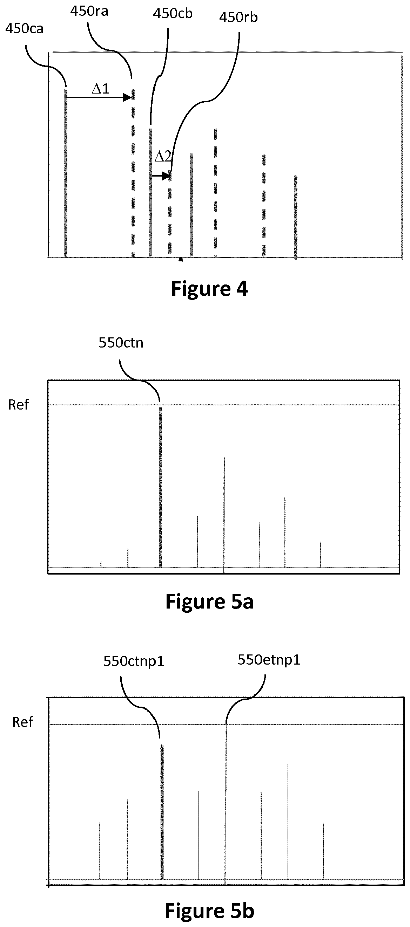

On décrit maintenant, en relation avec les **figures 3b****,** **3c et 3d****,** les étapes d'un procédé de correction d'une CIR selon différents modes de réalisation de l'invention. Certains traitements mis en œuvre dans certaines étapes du procédé selon l'invention sont par ailleurs discutés en relation avec les **figures 4, 5a et 5b****.**

Plus particulièrement, lors d'une **étape E301,** une CIR primaire du canal de propagation est obtenue. Par exemple, une telle CIR primaire est délivrée par un démodulateur d'un récepteur d'un équipement de surveillance d'un réseau SFN.

Lors de l'**étape E300** d'obtention de la CIR courante, les pics de la CIR primaire ayant un niveau absolu inférieur à un seuil prédéterminé peuvent ainsi être supprimés.

Ainsi, la CIR est mise en forme de sorte que seuls les pics correspondant à des trajets d'intérêt, encore appelés échos significatifs, dans le canal de propagation sont conservés dans la CIR courante.

Dans d'autres modes de réalisation non illustrés, l'étape E301 n'est pas mise en œuvre et la CIR courante comprend les pics représentatifs de tous les trajets du canal de propagation.

Dans certains modes de réalisation, la CIR primaire et/ou la CIR courante et/ou la CIR de référence sont obtenues à partir d'un signal ayant été propagé à travers le canal de propagation. Par exemple, il s'agit d'un signal modulé OFDM (pour « Orthogonal Frequency-Division Multiplexing » en anglais) tel qu'utilisé dans les réseaux de diffusion numérique (e.g. DVB-T/T2, ISDB-T, ATSC-3, DAB, etc.). Dans certains modes de réalisation, le signal en question a été capté via une unique antenne, par exemple comme c'est classiquement le cas pour un équipement de surveillance d'un réseau SFN.

De retour à la figure 3b, lors d'une **étape E302,** l'éligibilité de la CIR courante au procédé de correction selon l'invention est testée.

Par exemple, le nombre de pics présent dans la CIR courante est dénombré. Si ce nombre est inférieur à un nombre minimum (e.g. le nombre minimum est choisi égal à 3), la méthode selon l'invention n'est pas appliquée. De même, si ce nombre est supérieur à un nombre maximum (e.g. le nombre maximum est choisi égal à 64), la méthode selon l'invention n'est pas appliquée afin de ne pas engendrer une surcharge calculatoire.

Lorsqu'il est décidé que la CIR courante n'est pas éligible au procédé de correction selon l'invention, une méthode connue de repositionnement dans une fenêtre temporelle prédéfinie est appliquée à la CIR courante lors d'une **étape E304.** Il s'agit par exemple d'une méthode connue basée sur le centre de gravité pondéré des différents pics de la CIR basée sur le chemin le plus fort comme décrit ci-dessus en relation avec les figures 2a à 2c. Dans ce cas, les paramètres obtenus par une telle méthode connue sont utilisés lors de l'**étape E330** pour corriger la CIR courante.

Dans d'autres modes de réalisation non illustrés, l'étape E302 n'est pas mise en œuvre et la CIR courante est systématiquement traitée via le procédé de correction selon l'invention.

De retour à la figure 3b, lors d'une **étape E303,** il est vérifié que la mise en œuvre du procédé de correction selon l'invention est autorisée indépendamment des caractéristiques de la CIR courante. Par exemple, la mise en œuvre peut être suspendue afin d'économiser les ressources calculatoires du système effectuant les traitements. Dans ce cas, la CIR courante est traitée par une méthode connue lors de l'étape E304 quand bien même elle a été reconnue éligible lors de l'étape E302.

Dans d'autres modes de réalisation non illustrés, l'étape E303 n'est pas mise en œuvre et la CIR courante est systématiquement traitée via le procédé de correction selon l'invention.

Dans le mode de réalisation illustré sur la figure 3b, le décalage temporel entre la CIR courante et la CIR de référence est estimé lors de l'**étape E310** d'estimation. Par exemple, un tel décalage temporel est estimé via la mise en œuvre des étapes E310a, E310b et E310c.

Selon un exemple de réalisation, lors de l'**étape E310a,** le décalage temporel entre la CIR courante et la CIR de référence est estimé via une mise en concordance temporelle des CIR courante et de référence en question. Par ailleurs, le décalage temporel ainsi estimé est associé à un score de pertinence.

Par exemple, comme illustré sur la figure 3c, l'**étape E310a** comprend une **étape E310a1** lors de laquelle un délai candidat entre un des pics de la CIR courante et un pic de même rang dans la CIR de référence est déterminé. Par ailleurs, lors d'une **étape E310a2,** la CIR courante et la CIR de référence sont mises en concordance temporelle sur la base du délai candidat. Par exemple la CIR courante, ou la CIR de référence, est décalée temporellement de manière à tendre vers une superposition des CIRs courante et de référence. De la sorte, lors d'une **étape E310a3,** la CIR courante et la CIR de référence sont comparées après mise en concordance temporelle afin de délivrer un score de pertinence associé au délai candidat. Par exemple, le score de pertinence est fonction du nombre de pics de la CIR courante se superposant à un pic correspondant de la CIR de référence après la mise en concordance temporelle précitée sur la base du délai candidat. Par ailleurs, lorsque les étapes E310a, E310b et E310c (décrites ci-après) sont mises en œuvre pour au moins deux pics de la CIR de référence, le décalage temporel est choisi comme étant le délai candidat associé au score de pertinence extrémal (e.g. le score de pertinence le plus haut). Ainsi, l'estimation du décalage temporel est faiblement demandeur en charge de calcul.

Les traitements associés aux étapes E310a, E310b et E310c peuvent être mieux compris en considérant par exemple la configuration illustrée sur la figure 4. Plus particulièrement, le pic 450ca de rang 1 de la CIR courante (composée des pics en traits pleins) se situe à un délai candidat Δ1 du pic 450ra de rang 1 de la CIR de référence (composée des pics en traits discontinus). De la sorte, lors de l'étape E310a2, la CIR courante, ou la CIR de référence, est décalée temporellement du délai candidat Δ1 de manière à tenter de superposer les CIRs courante et de référence, ou du moins les pics 450ca et 450ra de rang 1. Lors de l'étape E310a3, un score de pertinence associé au délai candidat Δ1 est obtenu comme étant le nombre de pics de la CIR courante se superposant à un pic correspondant de la CIR de référence après le décalage temporel de la CIR courante ou de la CIR de référence. Les étapes E310a, E310b et E310c sont alors appliquées de manière successive aux autres pics de la CIR courante. Par exemple les étapes E310a, E310b et E310c sont appliquées au pic 450cb de rang 2 se situant à un délai candidat Δ2 du pic 450rb de rang 2 de la CIR de référence. Un score de pertinence associé au délai candidat Δ2 est obtenu et le décalage temporel est choisi comme étant le délai candidat associé au score de pertinence le plus élevé.

De retour à la figure 3b, lors d'une **étape E310c,** le score de pertinence associé au décalage temporel estimé lors de l'étape E310a est comparé à un seuil. Par exemple, si le score de pertinence en question est inférieur à un score minimum prédéterminé, le décalage temporel ainsi estimé par la mise en œuvre de l'étape E310a n'est pas retenu car considéré comme trop peu fiable.

Dans ce cas, le décalage temporel est à nouveau estimé lors d'une **étape E310b** via le calcul d'une fonction de corrélation entre la CIR courante et la CIR de référence. Ainsi, la mise en œuvre de la méthode d'estimation du décalage temporel la plus adaptée est utilisée suivant la situation. Par ailleurs, la charge de calcul globale de la méthode proposée reste maitrisée.

Dans des variantes, une telle fonction de corrélation est calculée dans le domaine temporel par fenêtre glissante. Plus particulièrement, la CIR de référence est décalée temporellement d'une valeur n^{∗}Ts, avec Ts une période d'échantillonnage et n variant d'une unité à chaque itération, avant d'être multipliée échantillon temporel par échantillon temporel avec la CIR courante. La somme du produit des points coïncidant entre ces 2 CIRs donne alors une valeur de la fonction de corrélation pour la valeur temporelle n^{∗}Ts considérée. Un tel calcul direct dans le domaine temporel peut s'interpréter comme une convolution entre les CIRs.

Alternativement, dans d'autres variantes la fonction de corrélation est calculée dans le domaine fréquentiel. En effet, dans ce cas la convolution rencontrée dans le domaine temporel se transforme en une simple multiplication terme à terme dans le domaine fréquentiel, simplifiant par là-même l'implémentation de la solution. Cette approche repose sur le calcul de la transformée de Fourier (e.g. sous forme de DFT (pour « Discrète Fourier Transform » en anglais) ou de FFT (pour « Fast Fourier Transform » en anglais)) des CIR courantes et de référence, ainsi que de la transformée de Fourier inverse du résultat de la multiplication terme à terme en question.

Dans des modes de réalisation non illustrés, les étapes E310c et E310b ne sont pas mises en œuvre et le décalage temporel est toujours estimé par une mise en concordance temporelle des CIR courante et de référence via la mise en œuvre de l'étape E310a, permettant par exemple de gérer des configurations de CIR dans lesquelles l'utilisation d'une corrélation peut s'avérer moins fiable.

Dans des modes de réalisation non illustrés, les étapes E310a et E310c ne sont pas mises en œuvre et le décalage temporel est toujours estimé par corrélation via la mise en œuvre de l'étape E310b.

De retour à la figure 3b, lors d'une **étape E311,** la CIR de référence peut être comparée à une CIR de référence initiale. De la sorte, s'il est décidé que la CIR de référence est suffisamment proche d'une CIR de référence initiale, la CIR de référence est réinitialisée à la valeur de la CIR de référence initiale lors d'une **étape E312** pour une prochaine application des étapes du procédé selon l'invention à une nouvelle CIR courante.

Lors d'une **étape E313,** il est décidé si le décalage temporel estimé à l'étape E310 est cohérent (e.g. il est décidé si l'étape E310 n'a pas fourni une valeur aberrante, ou pas de valeur du tout, etc.). S'il est décidé que le décalage temporel estimé à l'étape E310 n'est pas cohérent, le décalage temporel estimé lors de la mise en œuvre de cette étape E310 n'est pas conservé lors d'une étape E314 et la CIR courante est délivrée telle qu'elle lors d'une **étape E335,** i.e. sans correction sur la base du décalage temporel.

A contrario, s'il est décidé que le décalage temporel estimé à l'étape E310 est cohérent, un ou plusieurs niveau(x) absolu(s) d'un ou plusieurs pic(s) correspondant de la CIR courante est ou sont estimé(s) lors d'une **étape E320.** Ainsi, le niveau (e.g. l'amplitude ou la puissance) des pics présents dans la CIR est également corrigé en plus de la dérive temporelle.

Par exemple, dans le mode de réalisation illustré sur la figure 3d, l'étape E320 comprend une **étape E320a** lors de laquelle la CIR courante et la CIR de référence sont mises en concordance temporelle sur la base du décalage temporel estimé lors de l'étape E310. Par exemple, la CIR courante, ou la CIR de référence, est décalée temporellement d'un délai égal au décalage temporel. Lors d'une **étape E320b** un écart de niveau entre un pic courant de la CIR courante et au moins un pic de la CIR de référence, voisin temporellement du pic courant après la mise en concordance temporelle sur la base du décalage temporel, est déterminé. De la sorte, l'évolution relative du niveau du pic courant considéré, entre l'instant correspondant à la CIR courante, et l'instant correspondant à la CIR de référence, est obtenue. Cependant, dans le mode de réalisation considéré, il est également obtenu lors d'une **étape E320c** une évolution du niveau d'un signal ayant été propagé à travers le canal de propagation lorsque le canal de propagation passe :
- d'un état de référence correspondant à la CIR de référence ; à
- un état correspondant à la CIR courante.

Par exemple, l'évolution en question est obtenue via un indicateur de niveau de signal reçu, ou RSSI (pour « Received Signal Strength Indication » en anglais), délivré par exemple par le démodulateur de l'équipement de surveillance en train de surveiller le canal de propagation en question. La connaissance d'une telle évolution du niveau absolu du signal total ayant traversé le canal peut s'avérer intéressante par exemple lorsque la CIR courante et/ou la CIR de référence ont été délivrées par des démodulateurs embarquant certaines fonctionnalités de contrôle de gain dans la chaine de réception, ou AGC (pour « Automatic gain control » en anglais).

Les figures 5a et 5b illustrent une problématique associée à un tel système d'AGC. Plus particulièrement, le pic 550ctn de rang 3 dans la CIR considérée à un instant N (figure 5a) est le pic de plus fort niveau dans la CIR en question. Ainsi, l'AGC du récepteur du système de surveillance délivrant la CIR en question détermine les gains de chaine de sorte que le niveau du signal reçu (niveau ici déterminé par le niveau du pic 550ctn prédominant) atteigne le niveau de consigne Ref. Or, à l'instant N+l (figure 5b), le niveau du pic 550ctnpl de rang 3 dans la CIR maintenant considérée à un instant N+l a baissé de sorte que le pic en question n'est plus le pic prédominant dans le niveau de signal reçu. De la sorte, dans l'hypothèse où le niveau absolu des pics autres que le pic 550ctnpl n'a pas évolué entre les instants N et N+l, l'AGC va augmenter les gains de réception de sorte que le niveau du signal reçu (niveau ici déterminé par le niveau du pic 550etnpl de rang 5 qui est le pic prédominant) atteigne toujours le niveau de consigne Ref. Ainsi, si l'on se base simplement sur la CIR telle que délivrée par le démodulateur après application des gains d'AGC, il semble a priori que le niveau de tous les pics présents dans la CIR ont évolué entre les instants N et N+l alors qu'une analyse basée sur la connaissance de l'évolution du niveau de signal reçu (i.e. de la puissance de tous les pics présents dans la CIR en pratique) permet de distinguer entre d'une part les variations de niveau des pics eux-mêmes et d'autre part l'effet de l'AGC.

Cependant, dans d'autres modes de réalisation non illustrés, l'étape E320c n'est pas mise en œuvre et seule la détermination des évolutions relatives du niveau des pics est mise en œuvre lors de l'étape E320b, par exemple lorsqu'aucun système d'AGC n'est présent.

Dans encore d'autres modes de réalisation non illustrés, l'étape E320 d'estimation du niveau absolu des pics de la CIR courante n'est pas mise en œuvre et la correction à l'étape E330 n'est basée que sur le décalage temporel estimé à l'étape E310.

De retour à la figure 3b, lors d'une **étape E321** la CIR courante est comparée à la CIR de référence, notamment en ce qui concerne la puissance des pics qui composent les CIR en question. De la sorte, s'il est décidé que la CIR courante est trop éloignée de la CIR de référence, la CIR de référence est réinitialisée lors d'une **étape E322** à la valeur de la CIR courante, après correction de cette dernière, pour une prochaine application des étapes précitées du procédé selon l'invention. En d'autres termes, pour une itération donnée du procédé, la réponse impulsionnelle de référence est une réponse impulsionnelle corrigée obtenue à une itération précédente (i.e. une CIR de référence « itérative »).

Lors d'une **étape E323,** il est décidé si le niveau absolu des pics de la CIR courante estimé à l'étape E320 est cohérent (e.g. il est décidé si l'étape E320 n'a pas fourni de valeurs aberrantes, ou pas de valeur du tout, etc.). S'il est décidé que le niveau en question n'est pas cohérent, le niveau ainsi estimé n'est pas conservé et le niveau global de la CIR est corrigé lors d'une **étape E324.** Dans ce cas, le niveau absolu des pics de la CIR courante estimé à l'étape E320 n'est pas pris en compte lors de la correction de la CIR à l'étape E330. A contrario, lorsque le niveau absolu des pics de la CIR courante estimé à l'étape E320 est décidé comme étant cohérent, la correction de la CIR à l'étape E330 prend en compte le niveau absolu des pics de la CIR courante estimé à l'étape E320.

Lors de l'étape E335, la CIR corrigée (sur la base du décalage temporel estimé lors de la mise en œuvre de l'étape E310 et éventuellement sur la base du ou des niveaux absolus estimés lors de la mise en œuvre de l'étape E323) lors de l'étape E330 est mise en forme pour être délivrée, par exemple à un dispositif d'affichage ou à un dispositif de surveillance du canal de propagation, etc. Dans certains modes de réalisation, le procédé comprend en outre une étape d'affichage de la CIR corrigée, par exemple sur un écran du dispositif d'affichage ou de l'équipement de surveillance du canal de propagation, etc. Plus particulièrement, une CIR est classiquement affichée sur un graphique utilisant des axes temps et puissance. Cependant, pour une CIR n'ayant pas été corrigée selon la présente technique, l'affichage se fait par exemple en recalant l'écho de plus forte puissance au point de coordonnées (0 µs, 0 dB). En d'autres termes, tous les échos sont affichés relativement à l'écho de plus forte puissance (écho principal). A contrario, une CIR corrigée selon la présente technique est stabilisée en temps et aussi en niveau suivant le mode de réalisation considéré. De la sorte, une CIR corrigée selon la présente technique peut être affichée en conservant les positions temporelles et les niveaux de puissance absolus, i.e. tels que délivrés lors de l'étape E335.

Par ailleurs si, comme décrit ci-dessus, il est décidé lors de la mise en œuvre de l'étape E313 que le décalage temporel estimé à l'étape E310 n'est pas cohérent, la CIR courante est délivrée telle qu'elle lors de l'étape E335, i.e. sans correction lors de l'étape E330.

La **figure 6** présente un exemple de structure d'un dispositif 600 de correction d'une CIR. Plus particulièrement, un tel dispositif 600 permet la mise en œuvre du procédé des figures 3a à 3d. Le dispositif 600 comprend une mémoire vive 603 (par exemple une mémoire RAM), une unité de traitement 602 équipée par exemple d'un processeur, et pilotée par un programme d'ordinateur stocké dans une mémoire morte 601 (par exemple une mémoire ROM ou un disque dur). A l'initialisation, les instructions de code du programme d'ordinateur sont par exemple chargées dans la mémoire vive 603 avant d'être exécutées par le processeur de l'unité de traitement 602.

Cette figure 6 illustre seulement une manière particulière, parmi plusieurs possibles, de réaliser les moyens compris dans le dispositif 600, afin qu'il effectue certaines étapes du procédé détaillé ci-dessus, en relation avec les figures 3a à 3d (dans l'un quelconque des différents modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel). Dans le cas où les moyens compris dans le dispositif 600 sont réalisés avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé de correction d'une réponse impulsionnelle d'un canal de propagation multi-trajets,
**caractérisé en ce qu'**il comprend au moins une itération des étapes suivantes :
- obtention (E300) d'une réponse impulsionnelle courante dudit canal de propagation ;
- estimation (E310) d'un décalage temporel entre ladite réponse impulsionnelle courante et une réponse impulsionnelle de référence dudit canal de propagation ; et
- correction (E320) de ladite réponse impulsionnelle courante sur la base au moins dudit décalage temporel, délivrant une réponse impulsionnelle corrigée.

2. Procédé selon la revendication 1,
dans lequel ladite estimation d'un décalage temporel comprend un calcul (E310b) d'une fonction de corrélation entre ladite réponse impulsionnelle courante et ladite réponse impulsionnelle de référence,
ledit décalage temporel étant fonction d'un extremum de ladite fonction de corrélation.

3. Procédé selon la revendication 1,
dans lequel ladite estimation d'un décalage temporel comprend, pour au moins deux pics de ladite réponse impulsionnelle courante correspondant chacun à un trajet dudit canal de propagation, les sous-étapes suivantes :
- détermination (E310al) d'un délai candidat entre un desdits pics et un pic de même rang dans ladite réponse impulsionnelle de référence ;
- mise en concordance temporelle (E310a2) de ladite réponse impulsionnelle courante avec ladite réponse impulsionnelle de référence sur la base dudit délai candidat ;
- comparaison (E310a3) de ladite réponse impulsionnelle courante avec ladite réponse impulsionnelle de référence après ladite mise en concordance temporelle sur la base dudit délai candidat, ladite comparaison délivrant un score de pertinence associé audit délai candidat,
ledit décalage temporel étant fonction du délai candidat associé au score de pertinence extrémal.

4. Procédé selon la revendication 3,
dans lequel ledit score de pertinence est fonction du nombre de pics de ladite réponse impulsionnelle courante se superposant à un pic correspondant de ladite réponse impulsionnelle de référence après ladite mise en concordance temporelle sur la base dudit délai candidat.

5. Procédé selon la revendication 3 ou 4,
dans lequel, si ledit score de pertinence extrémal est, en valeur absolue, inférieur à un score minimum prédéterminé, ladite estimation d'un décalage temporel comprend en outre un calcul (E310b) d'une fonction de corrélation entre ladite réponse impulsionnelle courante et ladite réponse impulsionnelle de référence,
ledit décalage temporel étant fonction d'un extremum de ladite fonction de corrélation en lieu et place dudit délai candidat associé à un score de pertinence extrémal.

6. Procédé selon l'une quelconque des revendications 1 à 5,
comprenant en outre une étape d'estimation (E320) d'au moins un niveau absolu d'un pic courant de ladite réponse impulsionnelle courante,
ladite correction de ladite réponse impulsionnelle courante étant également basée sur ledit au moins un niveau absolu.

7. Procédé selon la revendication 6,
dans lequel ladite estimation du niveau absolu dudit pic courant comprend les sous-étapes suivantes :
- mise en concordance temporelle (E320a) de ladite réponse impulsionnelle courante avec ladite réponse impulsionnelle de référence sur la base dudit décalage temporel ;
- détermination (E320b) d'un écart de niveau entre ledit pic courant et au moins un pic de ladite réponse impulsionnelle de référence voisin temporellement dudit pic courant après ladite mise en concordance temporelle sur la base dudit décalage temporel ;
- obtention (E320c) d'une évolution d'un niveau d'un signal ayant été propagé à travers ledit canal de propagation lorsque ledit canal de propagation passe :
- d'un état de référence correspondant à ladite réponse impulsionnelle de référence ; à
- un état correspondant à ladite réponse impulsionnelle courante ;
ledit niveau absolu dudit pic courant étant fonction au moins dudit écart de niveau et de ladite évolution du niveau dudit signal.

8. Procédé selon l'une quelconque des revendications 1 à 7,
dans lequel ladite étape d'obtention comprend une suppression de pics ayant un niveau absolu inférieur à un seuil prédéterminé dans une réponse impulsionnelle primaire dudit canal de propagation délivrant ladite réponse impulsionnelle courante.

9. Procédé selon l'une quelconque des revendications 1 à 8,
dans lequel, pour une itération courante, ladite réponse impulsionnelle de référence est une réponse impulsionnelle corrigée obtenue à une itération précédente.

10. Procédé selon l'une quelconque des revendications 1 à 9,
dans lequel, pour une itération courante, ladite réponse impulsionnelle de référence est une réponse impulsionnelle dudit canal de propagation sélectionnée à un instant donné.

11. Produit programme d'ordinateur comprenant des instructions de code de programme pour la mise en œuvre d'un procédé selon l'une quelconque des revendications 1 à 10, lorsque ledit programme est exécuté par un processeur.

12. Dispositif de correction d'une réponse impulsionnelle d'un canal de propagation multi-trajets,
**caractérisé en ce qu'**il comprend une machine de calcul reprogrammable (602) ou une machine de calcul dédiée configurée pour :
- obtenir une réponse impulsionnelle courante dudit canal de propagation ;
- estimer un décalage temporel entre ladite réponse impulsionnelle courante et une réponse impulsionnelle de référence dudit canal de propagation ; et
- corriger ladite réponse impulsionnelle courante sur la base au moins dudit décalage temporel, délivrant une réponse impulsionnelle corrigée.

13. Procédé selon la revendication 1, **caractérisé en ce que** ladite réponse impulsionnelle courante et/ou ladite réponse impulsionnelle de référence sont obtenues à partir d'un signal modulé OFDM propagé à travers ledit canal de propagation.

## Patentansprüche

1. Verfahren zur Korrektur einer Impulsantwort eines Mehrweg-Übertragungskanals,
**dadurch gekennzeichnet, dass** es mindestens eine Iteration der folgenden Schritte umfasst:
- Erhalten (E300) einer aktuellen Impulsantwort des Übertragungskanals;
- Schätzen (E310) eines zeitlichen Versatzes zwischen der aktuellen Impulsantwort und einer Referenz-Impulsantwort des Übertragungskanals; und
- Korrigieren (E320) der aktuellen Impulsantwort auf Basis mindestens des zeitlichen Versatzes, wodurch eine korrigierte Impulsantwort geliefert wird.

2. Verfahren nach Anspruch 1,
wobei das Schätzen eines zeitlichen Versatzes ein Berechnen (E310b) einer Korrelationsfunktion zwischen der aktuellen Impulsantwort und der Referenz-Impulsantwort umfasst,
wobei der zeitliche Versatz von einem Extremwert der Korrelationsfunktion abhängig ist.

3. Verfahren nach Anspruch 1,
wobei das Schätzen eines zeitlichen Versatzes bei mindestens zwei Spitzen der aktuellen Impulsantwort, die je einem Weg des Übertragungskanals entsprechen, die folgenden Teilschritte umfasst:
- Bestimmen (E310a1) einer Kandidatenverzögerung zwischen einer der Spitzen und einer Spitze desselben Ranges in der Referenz-Impulsantwort;
- zeitliches Angleichen (E310a2) der aktuellen Impulsantwort an die Referenz-Impulsantwort auf Basis der Kandidaten-Verzögerung;
- Vergleichen (E310a3) der aktuellen Impulsantwort mit der Referenz-Impulsantwort nach der zeitlichen Angleichung auf Basis der Kandidaten-Verzögerung, wobei der Vergleich einen Relevanzscore liefert, der mit der Kandidaten-Verzögerung verknüpft ist,
wobei der zeitliche Versatz von der Kandidaten-Verzögerung abhängig ist, die mit dem Extrem-Relevanzscore verknüpft ist.

4. Verfahren nach Anspruch 3,
wobei der Relevanzscore von der Anzahl von Spitzen der aktuellen Impulsantwort abhängig ist, die sich nach der zeitlichen Angleichung auf Basis der Kandidaten-Verzögerung mit einer entsprechenden Spitze der Referenz-Impulsantwort überlagern.

5. Verfahren nach Anspruch 3 oder 4,
wobei, wenn der Extrem-Relevanzscore als absoluter Wert kleiner als ein vorbestimmter Mindestscore ist, das Schätzen eines zeitlichen Versatzes weiter ein Berechnen (E310b) einer Korrelationsfunktion zwischen der aktuellen Impulsantwort und der Referenz-Impulsantwort umfasst,
wobei der zeitliche Versatz, anstelle der mit einem Extrem-Relevanzscore verknüpften Kandidatenverzögerung, von einem Extremwert der Korrelationsfunktion abhängig ist.

6. Verfahren nach einem der Ansprüche 1 bis 5,
das weiter einen Schritt des Schätzens (E320) mindestens einer absoluten Höhe einer aktuellen Spitze der aktuellen Impulsantwort umfasst,
wobei die Korrektur der aktuellen Impulsantwort ebenfalls auf der mindestens einen absoluten Höhe basiert.

7. Verfahren nach Anspruch 6,
wobei das Schätzen der absoluten Höhe der aktuellen Spitze die folgenden Teilschritte umfasst:
- zeitliches Angleichen (E320a) der aktuellen Impulsantwort auf Basis des zeitlichen Versatzes an die Referenz-Impulsantwort;
- Bestimmen (E320b) einer Höhenabweichung zwischen der aktuellen Spitze und mindestens einer Spitze der Referenz-Impulsantwort, die der aktuellen Spitze zeitlich benachbart ist, nach der zeitlichen Angleichung auf Basis des zeitlichen Versatzes;
- Erhalten (E320c) einer Entwicklung einer Höhe eines Signals, das durch den Übertragungskanal übertragen wurde, wenn der Übertragungskanal:
- von einem Referenzzustand, der der Referenz-Impulsantwort entspricht; zu
- einem Zustand übergeht, der der aktuellen Impulsantwort entspricht;
wobei die absolute Höhe der aktuellen Spitze von mindestens der Höhenabweichung und der Entwicklung der Höhe des Signals abhängig ist.

8. Verfahren nach einem der Ansprüche 1 bis 7, wobei der Schritt des Erhaltens ein Unterdrücken von Spitzen mit einer absoluten Höhe, die kleiner als eine vorbestimmte Schwelle ist, in einer primären Impulsantwort des Übertragungskanals umfasst, dass die aktuelle Impulsantwort liefert.

9. Verfahren nach einem der Ansprüche 1 bis 8, wobei es sich bei der Referenz-Impulsantwort bei einer aktuellen Iteration um eine in einer vorhergehenden Iteration erhaltene korrigierte Impulsantwort handelt.

10. Verfahren nach einem der Ansprüche 1 bis 9, wobei es sich bei der Referenz-Impulsantwort bei einer aktuellen Iteration um eine zu einem gegebenen Zeitpunkt ausgewählte Impulsantwort des Übertragungskanals handelt.

11. Computerprogrammprodukt, das Programmcodeanweisungen für die Umsetzung eines Verfahrens nach einem der Ansprüche 1 bis 10, wenn das Programm von einem Prozessor ausgeführt wird, umfasst.

12. Vorrichtung zur Korrektur einer Impulsantwort eines Mehrweg-Übertragungskanals,
**dadurch gekennzeichnet, dass** sie eine reprogrammierbare Rechenmaschine (602) oder eine dedizierte Rechenmaschine umfasst, die so ausgelegt ist, dass sie:
- eine aktuelle Impulsantwort des Übertragungskanals erhält;
- einen zeitlichen Versatz zwischen der aktuellen Impulsantwort und einer Referenz-Impulsantwort des Übertragungskanals schätzt; und
- die aktuelle Impulsantwort auf Basis mindestens des zeitlichen Versatzes korrigiert und dadurch eine korrigierte Impulsantwort liefert.

13. Verfahren nach Anspruch 1, **dadurch gekennzeichnet, dass** die aktuelle Impulsantwort und/oder die Referenz-Impulsantwort auf Grundlage eines modulierten OFDM-Signals erhalten werden, das durch den Übertragungskanal übertragen wird.

## Claims

1. Method for correcting an impulse response of a multipath propagation channel, **characterised in that** it comprises at least one iteration of the following steps:
- obtaining (E300) a current impulse response of said propagation channel;
- estimating (E310) a temporal shift between said current impulse response and a reference impulse response of said propagation channel; and
- correcting (E320) said current impulse response based on at least said temporal shift, delivering a corrected impulse response.

2. Method according to claim 1,
wherein said estimating a temporal shift includes calculating (E310b) a correlation function between said current impulse response and said reference impulse response, said temporal shift being a function of an extremal value of said correlation function.

3. Method according to claim 1,
wherein the estimating of a temporal shift comprises the following sub-steps for at least two peaks in said current impulse response, each corresponding to a path in said propagation channel:
- determining (E310a1) a candidate delay between one of said peaks and a peak of the same rank in said reference impulse response;
- setting up temporal concordance (E310a2) of said current impulse response with said reference impulse response based on said candidate delay;
- comparing (E310a3) said current impulse response with said reference impulse response after said setting up temporal concordance based on said candidate delay, said comparing delivering a relevance score associated with said candidate delay,
said temporal shift being a function of the candidate delay associated with the extremal relevance score.

4. Method according to claim 3,
wherein said relevance score is a function of the number of peaks in said current impulse response superposing on a corresponding peak in said reference impulse response after said setting up temporal concordance based on said candidate delay.

5. Method according to claim 3 or 4,
wherein, if the absolute value of said extremal relevance score is less than a predetermined minimum score, said estimating of a temporal shift also includes a calculation (E310b) of a correlation function between said current impulse response and said reference impulse response,
said temporal shift being a function of an extremal value of said correlation function instead of said candidate delay associated with an extremal relevance score.

6. Method according to any one of claims 1 to 5,
also including a step (E320) for estimating at least one absolute level of a current peak of said current impulse response,
said correcting said current impulse response being also based on said at least one absolute level.

7. Method according to claim 6,
wherein said estimating the absolute value of said current peak includes the following sub-steps:
- setting up temporal concordance (E320a) of said current impulse response with said reference impulse response based on said temporal shift;
- determining (E320b) a level difference between said current peak and at least one peak of said reference impulse response temporally adjacent to said current peak after said setting up temporal concordance based on said temporal shift;
- obtaining a change (E320c) in a signal level that has propagated through said propagation channel when said propagation channel passes from:
- a reference state corresponding to said reference impulse response, to
- a state corresponding to said current impulse response;
said absolute level of said current peak depending on at least said level difference and said change in the signal level.

8. Method according to any one of claims 1 to 7,
wherein said step of obtaining comprises eliminating peaks with an absolute level less than a predetermined threshold in a primary impulse response of said propagation channel delivering said current impulse response.

9. Method according to any one of claims 1 to 8,
wherein, for a current iteration, said reference impulse response is a corrected impulse response obtained in a preceding iteration.

10. Method according to any one of claims 1 to 9,
wherein, for a current iteration, said reference impulse response is an impulse response of said propagation channel selected at a given instant.

11. Computer program comprising program code instructions for implementing the method according to any one of claims 1 and 10 when said program is executed by a processor.

12. Device for correcting an impulse response of a multipath propagation channel, **characterised in that** it comprises a reprogrammable computation machine (602) or a dedicated computation machine configured for:
- obtaining a current impulse response of said propagation channel;
- estimating a temporal shift between said current impulse response and a reference impulse response of said propagation channel; and
- correcting said current impulse response based on at least said temporal shift, delivering a corrected impulse response.

13. Method according to claim 1, **characterised in that** said current impulse response and/or said reference impulse response are obtained from an OFDM modulated signal propagated through the propagation channel.
